# EUROPEAN PATENT SPECIFICATION

(11) **EP 3 613 992 B1**
(45) Date of publication and mention of the grant of the patent: **12.07.2023**
(21) Application number: 19192849.8
(22) Date of filing: 21.08.2019
(51) Int. Cl.: F04D 17/10, F04D 29/057, F04D 29/051, F04D 29/58, F04D 25/06, F16C 17/10, F16C 33/10, F16C 37/00

(54) **A TURBO COMPRESSOR HAVING A BEARING SLEEVE PROVIDED WITH AXIAL END CUTS**
TURBOVERDICHTER MIT EINER LAGERHÜLSE MIT AXIALEN ENDSCHNITTEN
TURBOCOMPRESSEUR DOTÉ D'UN MANCHON DE PALIER PRÉSENTANT DES ENTAILLES D'EXTRÉMITÉ AXIALE

(30) Priority: 22.08.2018 FR 1857596
(43) Date of publication of application: 26.02.2020
(73) Proprietor: Danfoss A/S, 6430 Nordborg (DK)
(72) Inventor: COTE, Julien, 6430 Nordborg (DK); BONNEFOI, Patrice, 6430 Nordborg (DK)
(74) Representative: Germain Maureau

(56) References cited:
- WO-A1-2018/041949
- GB-A- 963 443
- GB-A- 1 296 280
- JP-A- 2006 329 321
- US-A- 5 054 938

## Description

### Field of the invention

The present invention relates to a turbo compressor, and particularly to a refrigeration turbo compressor.

### Background of the invention

As known, a refrigeration turbo compressor may include:
- a drive shaft including a first axial end portion and a second axial end portion opposite to the first axial end portion,
- at least one compression stage configured to compress a refrigerant, the at least one compression stage including at least one impeller connected to the first axial end portion of the drive shaft,
- an electrical motor configured to drive in rotation the drive shaft about a rotation axis, the electrical motor including a stator and a rotor, the rotor being connected to the second axial end portion of the drive shaft,
- a thrust bearing arrangement configured to limit an axial movement of the drive shaft during operation,
- a bearing sleeve located between the electrical motor and the at least one impeller, the bearing sleeve having a longitudinal axis and surrounding the drive shaft, the bearing sleeve including:
   - a radial bearing part which is tubular and which is configured to rotatably support the drive shaft,
   - a sleeve part surrounding the radial bearing part, the sleeve part including an axial end face which faces towards the at least one impeller and a contact surface which is located at the axial end face and which is configured to cooperate with the thrust bearing arrangement,
   - an annular gap formed between the radial bearing part and the sleeve part, and
   - a cooling area provided on the sleeve part and including cooling channels formed in an outer circumferential surface of the sleeve part, the cooling channels being intended for the passage of a refrigerant so as to dissipate heat from the bearing sleeve.

The thrust bearing arrangement particularly includes:
- a thrust bearing member arranged on the outer surface of the drive shaft, the thrust bearing member extending radially outwardly with respect to the drive shaft,
- a first axial bearing plate having an annular ring shape, the first axial bearing plate having a first surface and a second surface opposite to the first surface of the first axial bearing plate,
- a second axial bearing plate having an annular ring shape, the second axial bearing plate having a first surface axially facing the first axial bearing plate and a second surface opposite to the first surface of the second axial bearing plate, and
- a spacer ring being clamped between the first surfaces of the first and second axial bearing plates at radial outer portions of the first and second axial bearing plates, radial inner portions of the first and second axial bearing plates defining a space in which extends the thrust bearing member.

WO 2018/041949 A1 discloses a compressor with a radial gas bearing. Other relevant prior art documents are GB 1 296 280 A, GB 963 443 A and US 5 054 938 A. If

In operation, the contact surface of the bearing sleeve abuts the second surface of the second axial bearing plate and the thrust bearing arrangement cooperates with the first surfaces of the first and second axial bearing plates in order to limit an axial movement of the drive shaft.

However, at the most critical running conditions of such a turbo compressor, high temperature gradients appear between the contact surface of the bearing sleeve (which is generally in contact with an axial bearing plate of the thrust bearing arrangement, said axial bearing plate being at a high temperature at said most critical running conditions) and the cooling area. Such high temperature gradients lead to radial deformations of the sleeve part (and particularly a radial bending of the sleeve part), and thus induce deformations of the contact surface of the sleeve part.

Such a deformation of the axial end face of the bearing sleeve may induce deformations of the first and second axial bearing plates, and thus of the gas films in the thrust bearing arrangement when the latter is a gas thrust bearing arrangement.

Consequently, a deformation of the axial end face of the bearing sleeve may deteriorate the parallel positioning of the first and second axial bearing plates, and may thus lead to seizure of the thrust bearing arrangement and shortened lifetime of the turbo compressor.

In addition, deformations of the axial end face of the bearing sleeve may also lead to an instability of the thrust bearing arrangement, which causes the generation of vibrations of the drive shaft and thus causes contacts of the latter with static parts of the turbo compressor leading to scratches or breaking of the drive shaft.

### Summary of the invention

It is an object of the present invention to provide an improved turbo compressor which can overcome the drawbacks encountered in conventional turbo compressors.

Another object of the present invention is to provide a turbo compressor which is reliable, and which is particularly not subjected to the above-mentioned deformations.

According to the invention such a turbo compressor includes:
- a drive shaft including a first axial end portion and a second axial end portion opposite to the first axial end portion,
- at least one compression stage configured to compress a refrigerant, the at least one compression stage including at least one impeller connected to the first axial end portion of the drive shaft,
- an electrical motor configured to drive in rotation the drive shaft about a rotation axis, the electrical motor including a stator and a rotor, the rotor being connected to the second axial end portion of the drive shaft,
- a thrust bearing arrangement configured to limit an axial movement of the drive shaft during operation,
- a bearing sleeve located between the electrical motor and the at least one impeller, the bearing sleeve having a longitudinal axis and surrounding the drive shaft, the bearing sleeve including:
   - a radial bearing part which is tubular and which is configured to rotatably support the drive shaft,
   - a sleeve part surrounding the radial bearing part, the sleeve part including an axial end face which faces towards the at least one impeller and a contact surface which is located at the axial end face and which is configured to cooperate with the thrust bearing arrangement,
   - an annular gap formed between the radial bearing part and the sleeve part, and
   - a cooling area formed in an outer circumferential surface of the sleeve part and being intended for the passage of a refrigerant so as to dissipate heat from the bearing sleeve,
wherein the sleeve part includes cuts distributed around the longitudinal axis of the bearing sleeve and emerging into the contact surface, and the radial bearing part is a radial gas bearing part.

Such a configuration of the turbo compressor substantially reduces the tangential stiffness of the bearing sleeve, notably in an area located between the axial end face and the cooling area, and thus avoids or at least strongly reduces radial deformations of the bearing sleeve and therefore deformations of the axial end face of the sleeve part.

Consequently, the configuration of the turbo compressor according to the present invention avoids a seizure of the thrust bearing arrangement and improve the stability of the latter, and therefore improves the reliability of the turbo compressor and increases the lifetime of the turbo compressor.

The turbo compressor may also include one or more of the following features, taken alone or in combination, as specified by the appended claims which define the scope of the present invention.

According to an embodiment of the invention, the cuts are configured, and for example sized, shaped and located, in such a manner to reduce a tangential stiffness of the sleeve part at the axial end face.

Advantageously, the cuts are configured to avoid deformation of the axial end face due to thermal expansion gradients oriented in a radial direction during operation of the turbo compressor.

According to an embodiment of the invention, each of the cuts extends substantially parallely to the longitudinal axis of the bearing sleeve.

According to an embodiment of the invention, each of the cuts extends through at least 50% of a radial thickness of a sleeve part portion of the sleeve part which is adjacent the contact surface, and for example through the entire radial thickness of the sleeve part portion.

According to an embodiment of the invention, each of the cuts emerges into the outer circumferential surface of the sleeve part and/or in an inner circumferential surface of the sleeve part.

According to an embodiment of the invention, each of the cuts emerges into the annular gap.

According to an embodiment of the invention, each of the cuts extends from the axial end face and to the cooling area or to the vicinity of the cooling area.

According to an embodiment of the invention, each of the cuts extends substantially radially with respect to the longitudinal axis of the bearing sleeve.

According to an embodiment of the invention, each of the cuts is defined by two side faces which are substantially parallel.

According to an embodiment of the invention, the sleeve part includes at least seven cuts, and for example at least ten cuts.

According to an embodiment of the invention, the contact surface is split by the cuts into several circumferential contact segments which are angularly separated from each other and which are distributed, for example regularly distributed, around the longitudinal axis of the bearing sleeve.

According to an embodiment of the invention, each of the circumferential contact segments has a cross section which has a substantially trapezoidal shape.

According to an embodiment of the invention, each of the circumferential contact segments is elongated and extends substantially parallely to the longitudinal axis of the bearing sleeve.

According to an embodiment of the invention, each circumferential contact segment is a circumferential contact finger.

According to an embodiment of the invention, the axial end face is planar and oriented perpendicularly with respect to the longitudinal axis of the bearing sleeve.

According to an embodiment of the invention, the radial bearing part has an inner diameter which is larger than an outer diameter of a bearing portion of the drive shaft which is surrounded by the radial bearing part, the bearing portion and the radial bearing part defining an annular gaseous chamber when the drive shaft is rotating.

According to an embodiment of the invention, the sleeve part is connected to the radial bearing part through a connecting part which is away from the axial end face.

According to an embodiment of the invention, the sleeve part and the radial bearing part are made in one piece.

According to an embodiment of the invention, the sleeve part and the radial bearing part are distinct from each other and are assembled together.

According to an embodiment of the invention, the sleeve part is shorter than the radial bearing part along the longitudinal axis of the bearing sleeve.

According to an embodiment of the invention, the thrust bearing arrangement is a gas thrust bearing arrangement.

According to an embodiment of the invention, the thrust bearing arrangement is located between the at least one compression stage and the bearing sleeve.

According to an embodiment of the invention, the contact surface is configured to cooperate with an axial bearing plate of the thrust bearing arrangement.

According to an embodiment of the invention, the thrust bearing arrangement includes a thrust bearing member arranged on the outer surface of the drive shaft, the thrust bearing member extending substantially radially outwardly with respect to the drive shaft.

According to an embodiment of the invention, the thrust bearing arrangement includes:
- a first axial bearing plate having an annular ring shape, the first axial bearing plate having a first surface and a second surface opposite to the first surface of the first axial bearing plate,
- a second axial bearing plate having an annular ring shape, the second axial bearing plate having a first surface axially facing the first axial bearing plate and a second surface opposite to the first surface of the second axial bearing plate, the second surface of the second axial bearing plate abutting against the contact surface of the bearing sleeve, and
- a spacer ring being clamped between the first surfaces of the first and second axial bearing plates at radial outer portions of the first and second axial bearing plates, the spacer ring defining an axial distance between the first and second axial bearing plates.

According to an embodiment of the invention, the first and second axial bearing plates are parallel to each other.

According to an embodiment of the invention, the thrust bearing member extends into a space between radial inner portions of the first surfaces of the first and second axial bearing plates.

According to an embodiment of the invention, the cooling area includes at least one annular cooling channel formed in the outer circumferential surface of the sleeve part and extending around the longitudinal axis of the bearing sleeve.

According to an embodiment of the invention, the turbo compressor includes a refrigerant inlet fluidly connected to the at least one annular cooling channel and configured to supply the at least one annular cooling channel with refrigerant, and a refrigerant outlet fluidly connected to the at least one annular cooling channel and configured to discharge refrigerant from the at least one annular cooling channel.

According to an embodiment of the invention, the at least one compression stage includes a first and a second compression stage configured to compress a refrigerant, the first and second compression stages respectively including a first and a second impeller, the first and second impellers being connected to the first axial end portion of the drive shaft.

According to an embodiment of the invention, each of the first and second impellers has a front-side and a back-side, the first and second impellers being arranged in a back-to-back configuration.

According to an embodiment of the invention, the turbo compressor includes an hermetic casing, the drive shaft being rotatably arranged within the hermetic casing.

According to an embodiment of the invention, the second axial end portion of the drive shaft includes a rotor attachment part including an axial bore receiving the rotor.

According to an embodiment of the invention, the turbo compressor includes a fixed compressor part including an abutment surface against which abuts the bearing sleeve, and for example the contact surface of the sleeve part.

According to an embodiment of the invention, the bearing sleeve is axially immobilized with respect to the fixed compressor part.

According to an embodiment of the invention, the turbo compressor further includes a securing member axially tightening the bearing sleeve against the fixed compressor part, and for example against the abutment surface of the fixed compressor part.

According to an embodiment of the invention, the fixed compressor part may include a tubular part defining an inner housing in which are received the first and second axial bearing plates and the spacer ring.

According to an embodiment of the invention, the bearing sleeve is a one-piece bearing sleeve.

According to an embodiment of the invention, the bearing sleeve is static.

According to an embodiment of the invention, the radial bearing part and the sleeve part are concentrically arranged.

These and other advantages will become apparent upon reading the following description in view of the drawing attached hereto representing, as non-limiting examples, embodiments of a turbo compressor according to the invention.

### Brief description of the drawings

The following detailed description of several embodiments of the invention is better understood when read in conjunction with the appended drawings being understood, however, that the invention is not limited to the specific embodiments disclosed.
Figures 1 and 2 are longitudinal section views of a turbo compressor according to a first embodiment of the invention.
Figure 3 is a longitudinal section view of a bearing sleeve of the turbo compressor of figure 1.
Figure 4 is a perspective view of the bearing sleeve of figure 3.
Figure 5 is a perspective view of a bearing sleeve of a turbo compressor according to a second embodiment of the invention.
Figure 6 is a perspective view of a bearing sleeve of a turbo compressor according to a third embodiment of the invention.
Figure 7 is a perspective view of a bearing sleeve of a turbo compressor according to a fourth embodiment of the invention.
Figure 8 is a perspective view of a bearing sleeve of a turbo compressor according to a fifth embodiment of the invention.

### Detailed description of the invention

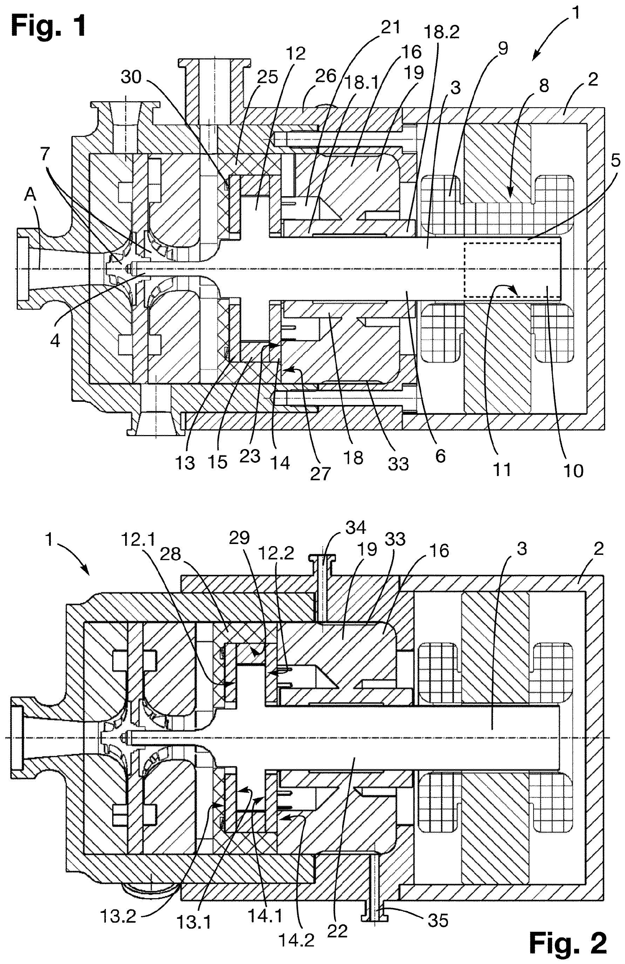

Figures 1 to 4 represent a refrigeration turbo compressor 1 according to a first embodiment of the invention, which may be for example a two-stage refrigeration turbo compressor.

The turbo compressor 1 includes an hermetic casing 2 and a drive shaft 3 which is rotatably arranged within the hermetic casing 2 and which extends along a longitudinal axis A. The drive shaft 3 includes a first axial end portion 4, a second axial end portion 5 opposite to the first axial end portion 4, and an intermediate portion 6 located between the first and second axial end portions 4, 5.

The turbo compressor 1 further includes at least one impeller 7 connected to the first axial end portion 4 of the drive shaft 3, and configured to compress a refrigerant. The turbo compressor 1 may for example include two impellers 7 arranged in a back-to-back configuration.

The turbo compressor 1 also includes an electrical motor 8 configured to drive in rotation the drive shaft 3 about the longitudinal axis A. The electrical motor 8 includes a stator 9 and a rotor 10 which is connected to the second axial end portion 5 of the drive shaft 3. To this end, the second axial end portion 5 may include an axial bore 11 within which is arranged the rotor 10. The rotor 10 may for example be firmly fitted, such as press-fitted or shrink fitted, within the axial bore 11.

The turbo compressor 1 further includes a thrust bearing arrangement, also named axial bearing arrangement, arranged between the at least one impeller 7 and the electrical motor 8 and configured to limit an axial movement of the drive shaft 3 during operation. The thrust bearing arrangement is advantageously a gas thrust bearing arrangement.

The thrust bearing arrangement includes a thrust bearing member 12 arranged on an outer surface of the intermediate portion 6 of the drive shaft 3 and extending radially outwardly with respect to the drive shaft 3. The thrust bearing member 12 has a flat disc shape, and includes a first axial end face 12.1 and a second axial end face 12.2 opposite to the first axial end face 12.1.

The thrust bearing arrangement also includes a first axial bearing plate 13 and a second axial bearing plate 14 each having an annular ring shape, and being arranged in parallel. The first axial bearing plate 13 has a first surface 13.1 axially facing the second axial bearing plate 14 and a second surface 13.2 opposite to the first surface 13.1, while the second axial bearing plate 14 has a first surface 14.1 axially facing the first axial bearing plate 13 and a second surface 14.2 opposite to the first surface 14.1.

The thrust bearing arrangement further includes a spacer ring 15 surrounding the thrust bearing member 12, and being clamped between the first surfaces 13.1, 14.1 of the first and second axial bearing plates 13, 14 at radial outer portions of the first and second axial bearing plates 13, 14. The spacer ring 15 defines an axial distance between the first and second axial bearing plates 13, 14, said axial distance being slightly greater than the width of the thrust bearing member 12.

The radial inner portions of the first surfaces 13.1, 14.1 of the first and second axial bearing plates 13, 14 define a space in which extends the thrust bearing member 12. Particularly, the first surfaces 13.1, 14.1 of the first and second axial bearing plates 13, 14 are respectively configured to cooperate with the first and second axial end faces 12.1, 12.2 of the thrust bearing member 12.

Advantageously, the turbo compressor 1 is configured so that gas refrigerant is introduced between the thrust bearing member 12 and the first surfaces 13.1, 14.1 of the first and second axial bearing plates 13, 14 to form a gas thrust bearing for the drive shaft 3.

The turbo compressor 1 also includes a bearing sleeve 16, also named bearing housing, which extends along the intermediate portion 6 of the drive shaft 3 and which is located between the thrust bearing arrangement and the electrical motor 8. The bearing sleeve 16 may be a one-piece bearing sleeve, or may be made from separated parts assembled together.

The bearing sleeve 16 particularly includes:
- a radial bearing part 18 which is tubular and which surrounds the intermediate portion 6 of the drive shaft 3, the radial bearing part 18 being configured to rotatably support the drive shaft 3,
- a sleeve part 19 surrounding the radial bearing part 18 and including an axial end face 20 which is planar and which extends perpendicularly to a longitudinal axis B of the bearing sleeve 16, the axial end face 20 facing towards the thrust bearing arrangement, and
- an annular gap 21 formed between the radial bearing part 18 and the sleeve part 19.

According to the first embodiment of the invention, the radial bearing part 18 and the sleeve part 19 are concentrically arranged, and the sleeve part 19 is connected to the radial bearing part 18 through a connecting part P which is away from the axial end face 20, and which is for example positioned substantially at a center of the axial length of the radial bearing part 18. The sleeve part 19 may be shorter than the radial bearing part 18 along the longitudinal axis B of the bearing sleeve 16.

Advantageously, the radial bearing part 18 includes first and second radial bearing surfaces 18.1, 18.2 located on each side of the connecting part P and configured to cooperate with the drive shaft 3. Each of the first and second radial bearing surfaces 18.1, 18.2 has advantageously an inner diameter which is larger than an outer diameter of a bearing portion 22 provided on the intermediate portion 6 of the drive shaft 3 and which is surrounded by the radial bearing part 18, such that the bearing portion 22 and each of the first and second radial bearing surfaces 18.1, 18.2 define an annular gaseous chamber when the drive shaft 3 is rotating. The turbo compressor 1 is particularly configured so that gas refrigerant is introduced between the bearing portion 22 of the drive shaft 3 and the inner surface of the radial bearing part 18 to form a radial gas bearing for the drive shaft 3.

The bearing sleeve 16 further includes a contact surface 23 located at the axial end face 20 of sleeve part 19, and the second surface 14.2 of the second axial bearing plate 14 abuts against the contact surface 23.

Advantageously, the bearing sleeve 16 is axially immobilized with respect to a fixed compressor part 25 of the turbo compressor 1. The turbo compressor 1 may therefore include a securing member 26 axially tightening the bearing sleeve 16 against the fixed compressor part 25, and more particularly against an abutment surface 27 provided on an axial surface of the fixed compressor part 25. The securing member 26 may be secured, for example by screwing, to the hermetic casing 2 or to the fixed compressor part 25. Particularly, the contact surface 23 of the bearing sleeve 16 abuts against the abutment surface 27.

The fixed compressor part 25 may for example include a tubular part 28 defining an inner housing 29 in which are received the first and second axial bearing plates 13, 14 and the spacer ring 15.

The turbo compressor 1 further includes an elastic element 30 arranged between the second surface 13.2 of the first axial bearing plate 13 and the fixed compressor part 25. The elastic element 30 axially biases the first and second axial bearing plates 13, 14 and the spacer ring 15 with a predetermined force, for example in the range of 1000 to 2000 N, against the contact surface 23 of the bearing sleeve 16. Advantageously, the elastic element 30 is an annular spring washer, preferably of the Belleville type, coaxially arranged with the bearing sleeve 16 and the drive shaft 3. The elastic element 30 is advantageously arranged in an annular recess formed in an axial surface of the fixed compressor part 25, and is in contact with a radial outer portion of the second surface 13.2 of the first axial bearing plate 13.

The elastic element 30 allows, notably when a thermal expansion occurs in the turbo compressor 1, an axial sliding of the first and second axial bearing plates 13, 14 and of the spacer ring 15 with respect to the fixed compressor part 25, and thus avoids deformations of said parts which could lead to a shortened lifetime of the turbo compressor 1.

The bearing sleeve 16 further includes a cooling area 31 formed in an outer circumferential surface 32 of the sleeve part 19. The cooling area 31 may for example include an annular cooling channel 33 formed in the outer circumferential surface 32 of the sleeve part 19 and extending around the longitudinal axis B of the bearing sleeve 16, the annular cooling channel 33 being intended for the passage of a refrigerant so as to dissipate heat from the bearing sleeve 16. Advantageously, the turbo compressor 1 includes (see figure 2) a refrigerant inlet 34 fluidly connected to the annular cooling channel 33 and configured to supply the annular cooling channel 33 with refrigerant, and a refrigerant outlet 35 fluidly connected to the annular cooling channel 33 and configured to discharge refrigerant from the annular cooling channel 33.

The bearing sleeve 16 further includes several cuts 36, and for example fifteen cuts, which are regularly distributed around the longitudinal axis B of the bearing sleeve 16, and which are sized, shaped and located in such a manner to reduce a tangential stiffness of the sleeve part 19 notably at the axial end face 20.

According to the first embodiment of the invention, each of the cuts 36 extends substantially parallely to the longitudinal axis B of the bearing sleeve 16 and substantially radially with respect to the longitudinal axis B of the bearing sleeve 16. Advantageously, each of the cuts 36 extends through the entire radial thickness of a sleeve part portion of the sleeve part 19 which is adjacent the contact surface 23, and thus respectively emerges into the outer circumferential surface 32 of the sleeve part 19 and into the annular gap 21.

According to the first embodiment of the invention, the contact surface 23 is split by the cuts 36 into several circumferential contact segments 37 which are angularly separated from each other and which are regularly distributed around the longitudinal axis B of the bearing sleeve 16. Each of the circumferential contact segments 37 has for example a cross section having a substantially trapezoidal shape.

According to the first embodiment of the invention, each of the cuts 36 extends from the axial end face 20 to the vicinity of the cooling area 31, and is defined by two side faces which are substantially parallel.

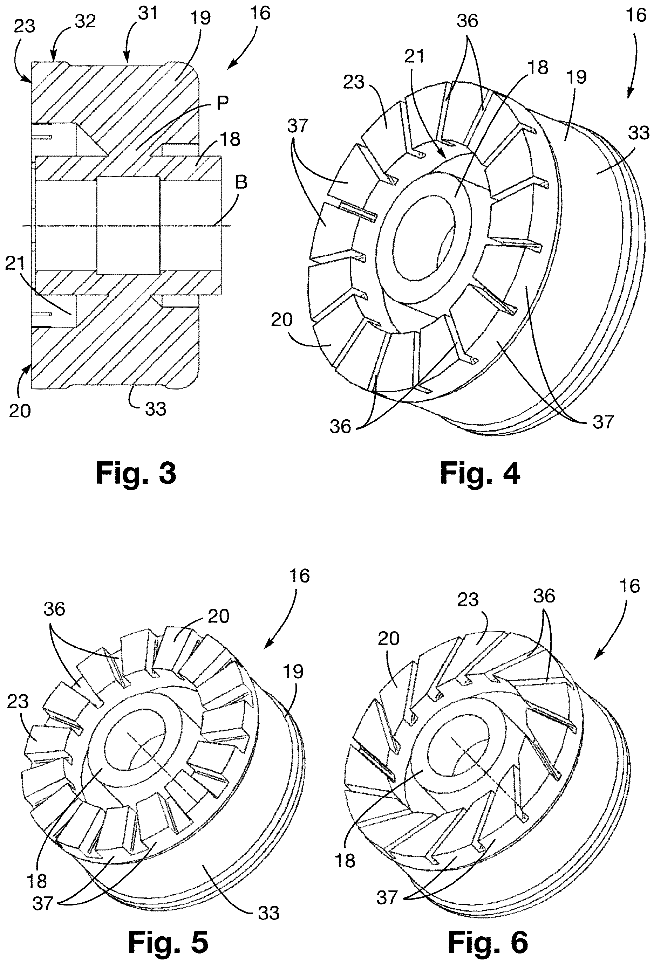

Figure 5 represents a bearing sleeve 16 of a turbo compressor 1 according to a second embodiment of the invention which differs from the first embodiment essentially in that each of the cuts 36 are defined by two side faces which are inclined with respect to each other such that each circumferential contact segment 37 has a cross section having a substantially rectangular shape.

Figure 6 represents a bearing sleeve 16 of a turbo compressor 1 according to a third embodiment of the invention which differs from the first embodiment essentially in that each of the cuts 36 extends substantially tangentially with respect to the radial bearing part 18.

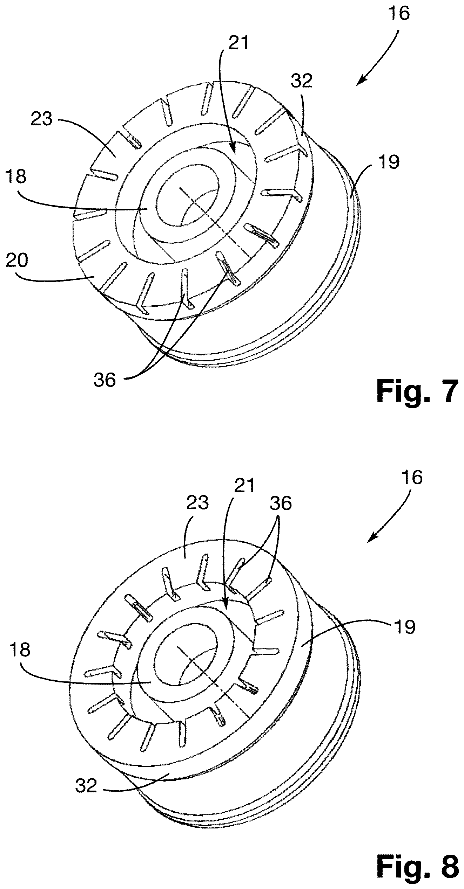

Figure 7 represents a bearing sleeve 16 of a turbo compressor 1 according to a fourth embodiment of the invention which differs from the first embodiment essentially in that each of the cuts 36 extends through only a part of the radial thickness of the sleeve part portion of the sleeve part 19 which is adjacent the contact surface 23, and emerges into the outer circumferential surface 32 of the sleeve part 19 (but not into the annular gap 21).

Figure 8 represents a bearing sleeve 16 of a turbo compressor 1 according to a fifth embodiment of the invention which differs from the first embodiment essentially in that each of the cuts 36 extends through only a part of the radial thickness of the sleeve part portion of the sleeve part 19 which is adjacent the contact surface 23, and emerges into the annular gap 21 (but not into the outer circumferential surface 32 of the sleeve part 19).

Of course, the invention is not restricted to the embodiments described above by way of non-limiting examples, but on the contrary it encompasses all embodiments thereof.

## Claims

1. A turbo compressor (1) including:
- a drive shaft (3) including a first axial end portion (4) and a second axial end portion (5) opposite to the first axial end portion (4),
- at least one compression stage configured to compress a refrigerant, the at least one compression stage including at least one impeller (7) connected to the first axial end portion (4) of the drive shaft (3),
- an electrical motor (8) configured to drive in rotation the drive shaft (3) about a rotation axis, the electrical motor including a stator (9) and a rotor (10), the rotor (10) being connected to the second axial end portion (5) of the drive shaft (3),
- a thrust bearing arrangement configured to limit an axial movement of the drive shaft (3) during operation,
- a bearing sleeve (16) located between the electrical motor (8) and the at least one impeller (7), the bearing sleeve (16) having a longitudinal axis (B) and surrounding the drive shaft (3), the bearing sleeve (16) including:
- a radial gas bearing part (18) which is tubular and which is configured to rotatably support the drive shaft (3),
- a sleeve part (19) surrounding the radial bearing part (18), the sleeve part (19) including an axial end face (20) which faces towards the at least one impeller (7) and a contact surface (23) which is located at the axial end face (20) and which is configured to cooperate with the thrust bearing arrangement,
- an annular gap (21) formed between the radial bearing part (18) and the sleeve part (19), and
- a cooling area (31) formed in an outer circumferential surface (32) of the sleeve part (19) and intended for the passage of a refrigerant so as to dissipate heat from the bearing sleeve (16),
**characterized in that** the sleeve part (19) includes cuts (36) distributed around the longitudinal axis (B) of the bearing sleeve (16) and emerging into the contact surface (23).

2. The turbo compressor (1) according to claim 1, wherein the cuts (36) are configured in such a manner to reduce a tangential stiffness of the sleeve part (19) at the axial end face (20).

3. The turbo compressor (1) according to claim 1 or 2, wherein each of the cuts (36) extends substantially parallely to the longitudinal axis (B) of the bearing sleeve (16).

4. The turbo compressor (1) according to any one of claims 1 to 3, wherein each of the cuts (36) extends through at least 50% of a radial thickness of a sleeve part portion of the sleeve part (19) which is adjacent the contact surface (23).

5. The turbo compressor (1) according to any one of claims 1 to 4, wherein each of the cuts (36) extends through the entire radial thickness of the sleeve part portion of the sleeve part (19).

6. The turbo compressor (1) according to any one of claims 1 to 5, wherein each of the cuts (36) emerges into the outer circumferential surface (32) of the sleeve part (19) and/or in an inner circumferential surface of the sleeve part (19).

7. The turbo compressor (1) according to any one of claims 1 to 6, wherein each of the cuts (36) emerges into the annular gap (21).

8. The turbo compressor (1) according to any one of claims 1 to 7, wherein each of the cuts (36) extends from the axial end face (20) and to the cooling area (31) or to the vicinity of the cooling area (31).

9. The turbo compressor (1) according to any one of claims 1 to 8, wherein each of the cuts (36) extends substantially radially with respect to the longitudinal axis (B) of the bearing sleeve (16).

10. The turbo compressor (1) according to any one of claims 1 to 9, wherein each of the cuts (36) is defined by two side faces which are substantially parallel.

11. The turbo compressor (1) according to any one of claims 1 to 10, wherein the contact surface (23) is split by the cuts (36) into several circumferential contact segments (37) which are angularly separated from each other and which are distributed around the longitudinal axis (B) of the bearing sleeve (16).

12. The turbo compressor (1) according to any one of claims 1 to 11, wherein the contact surface (23) is configured to cooperate with an axial bearing plate of the thrust bearing arrangement.

13. The turbo compressor (1) according to any one of claims 1 to 12, wherein the thrust bearing arrangement includes a thrust bearing member (12) arranged on the outer surface of the drive shaft (3), the thrust bearing member (12) extending substantially radially outwardly with respect to the drive shaft (3).

14. The turbo compressor (1) according to any one of claims 1 to 13, wherein the thrust bearing arrangement includes:
- a first axial bearing plate (13) having an annular ring shape, the first axial bearing plate (13) having a first surface (13.1) and a second surface (13.2) opposite to the first surface (13.1) of the first axial bearing plate (13),
- a second axial bearing plate (14) having an annular ring shape, the second axial bearing plate (14) having a first surface (14.1) axially facing the first axial bearing plate (13) and a second surface (14.2) opposite to the first surface (14.1) of the second axial bearing plate (14), the second surface (14.2) of the second axial bearing plate (14) abutting against the contact surface (23) of the bearing sleeve (16), and
- a spacer ring (15) being clamped between the first surfaces (13.1, 14.1) of the first and second axial bearing plates (13, 14) at radial outer portions of the first and second axial bearing plates (13, 14), the spacer ring (15) defining an axial distance between the first and second axial bearing plates (13, 14).

15. The turbo compressor (1) according to any one of claims 1 to 14, wherein the cooling area (31) includes at least one annular cooling channel (33) formed in the outer circumferential surface (32) of the sleeve part (19) and extending around the longitudinal axis (B) of the bearing sleeve (16).

## Patentansprüche

1. Turboverdichter (1), der Folgendes umfasst:
- eine Antriebswelle (3), die einen ersten axialen Endabschnitt (4) und einen zweiten axialen Endabschnitt (5) gegenüber dem ersten axialen Endabschnitt (4) umfasst,
- mindestens eine Verdichtungsstufe, die dazu ausgestaltet ist, ein Kältemittel zu verdichten, wobei die mindestens eine Verdichtungsstufe mindestens ein mit dem ersten axialen Endabschnitt (4) der Antriebswelle (3) verbundenes Laufrad (7) umfasst,
- einen Elektromotor (8), der dazu ausgestaltet ist, die Antriebswelle (3) um eine Drehachse drehend anzutreiben, wobei der Elektromotor einen Stator (9) und einen Rotor (10) umfasst, wobei der Rotor (10) mit dem zweiten axialen Endabschnitt (5) der Antriebswelle (3) verbunden ist,
- eine Drucklageranordnung, die dazu ausgestaltet ist, eine axiale Bewegung der Antriebswelle (3) während eines Betriebs zu begrenzen,
- eine Lagerhülse (16), die zwischen dem Elektromotor (8) und dem mindestens einen Laufrad (7) angeordnet ist, wobei die Lagerhülse (16) eine Längsachse (B) aufweist und die Antriebswelle (3) umgibt, wobei die Lagerhülse (16) Folgendes umfasst:
- einen Radialgaslagerteil (18), der rohrförmig ist und der dazu ausgestaltet ist, die Antriebswelle (3) drehend zu lagern,
- einen Hülsenteil (19), der den Radiallagerteil (18) umgibt, wobei der Hülsenteil (19) eine axiale Endfläche (20), die dem mindestens einen Laufrad (7) zugewandt ist, und eine Kontaktfläche (23), die an der axialen Endfläche (20) angeordnet ist und die dazu ausgestaltet ist, mit der Drucklageranordnung zusammenzuwirken, umfasst,
- einen ringförmigen Spalt (21), der zwischen dem Radiallagerteil (18) und dem Hülsenteil (19) ausgebildet ist, und
- einen Kühlbereich (31), der in einer Außenumfangsfläche (32) des Hülsenteils (19) ausgebildet und für den Durchgang eines Kältemittels vorgesehen ist, um Wärme von der Lagerhülse (16) abzuleiten,
**dadurch gekennzeichnet, dass** der Hülsenteil (19) Einschnitte (36) umfasst, die um die Längsachse (B) der Lagerhülse (16) verteilt sind und in die Kontaktfläche (23) ragen.

2. Turboverdichter (1) nach Anspruch 1, wobei die Einschnitte (36) derart ausgestaltet sind, dass sie eine tangentiale Steifigkeit des Hülsenteils (19) an der axialen Endfläche (20) reduzieren.

3. Turboverdichter (1) nach Anspruch 1 oder 2, wobei sich jeder der Einschnitte (36) im Wesentlichen parallel zu der Längsachse (B) der Lagerhülse (16) erstreckt.

4. Turboverdichter (1) nach einem der Ansprüche 1 bis 3, wobei sich jeder der Einschnitte (36) durch mindestens 50 % einer radialen Dicke eines Hülsenteilabschnitts des Hülsenteils (19), der an die Kontaktfläche (23) angrenzt, erstreckt.

5. Turboverdichter (1) nach einem der Ansprüche 1 bis 4, wobei sich jeder der Einschnitte (36) durch die gesamte radiale Dicke des Hülsenteilabschnitts des Hülsenteils (19) erstreckt.

6. Turboverdichter (1) nach einem der Ansprüche 1 bis 5, wobei jeder der Einschnitte (36) in die Außenumfangsfläche (32) des Hülsenteils (19) und/oder in eine Innenumfangsfläche des Hülsenteils (19) ragt.

7. Turboverdichter (1) nach einem der Ansprüche 1 bis 6, wobei jeder der Einschnitte (36) in den ringförmigen Spalt (21) ragt.

8. Turboverdichter (1) nach einem der Ansprüche 1 bis 7, wobei sich jeder der Einschnitte (36) von der axialen Endfläche (20) und zu dem Kühlbereich (31) oder in die Nähe des Kühlbereichs (31) erstreckt.

9. Turboverdichter (1) nach einem der Ansprüche 1 bis 8, wobei sich jeder der Einschnitte (36) im Wesentlichen radial in Bezug auf die Längsachse (B) der Lagerhülse (16) erstreckt.

10. Turboverdichter (1) nach einem der Ansprüche 1 bis 9, wobei jeder der Einschnitte (36) durch zwei Seitenflächen definiert ist, die im Wesentlichen parallel sind.

11. Turboverdichter (1) nach einem der Ansprüche 1 bis 10, wobei die Kontaktfläche (23) durch die Einschnitte (36) in mehrere umlaufende Kontaktsegmente (37) unterteilt ist, die in einem Winkel voneinander getrennt sind und die um die Längsachse (B) der Lagerhülse (16) verteilt sind.

12. Turboverdichter (1) nach einem der Ansprüche 1 bis 11, wobei die Kontaktfläche (23) dazu ausgestaltet ist, mit einer Axiallagerplatte der Drucklageranordnung zusammenzuwirken.

13. Turboverdichter (1) nach einem der Ansprüche 1 bis 12, wobei die Drucklageranordnung ein Drucklagerelement (12) umfasst, das an der Außenfläche der Antriebswelle (3) angeordnet ist, wobei sich das Drucklagerelement (12) in Bezug auf die Antriebswelle (3) im Wesentlichen radial nach außen erstreckt.

14. Turboverdichter (1) nach einem der Ansprüche 1 bis 13, wobei die Drucklageranordnung Folgendes umfasst:
- eine erste Axiallagerplatte (13), die eine kreisförmige Ringform aufweist, wobei die erste Axiallagerplatte (13) eine erste Fläche (13.1) und eine zweite Fläche (13.2) gegenüber der ersten Fläche (13.1) der ersten Axiallagerplatte (13) aufweist,
- eine zweite Axiallagerplatte (14), die eine kreisförmige Ringform aufweist, wobei die zweite Axiallagerplatte (14) eine erste Fläche (14.1), die der ersten Axiallagerplatte (13) axial zugewandt ist, und eine zweite Fläche (14.2) gegenüber der ersten Fläche (14.1) der zweiten Axiallagerplatte (14) aufweist, wobei die zweite Fläche (14.2) der zweiten Axiallagerplatte (14) an der Kontaktfläche (23) der Lagerhülse (16) anliegt, und
- einen Abstandsring (15), der zwischen den ersten Flächen (13.1, 14.1) der ersten und zweiten Axiallagerplatten (13, 14) an radial äußeren Abschnitten der ersten und zweiten Axiallagerplatten (13, 14) eingeklemmt ist, wobei der Abstandsring (15) einen axialen Abstand zwischen den ersten und zweiten Axiallagerplatten (13, 14) definiert.

15. Turboverdichter (1) nach einem der Ansprüche 1 bis 14, wobei der Kühlbereich (31) mindestens einen kreisförmigen Kühlkanal (33) umfasst, der in der Außenumfangsfläche (32) des Hülsenteils (19) ausgebildet ist und sich um die Längsachse (B) der Lagerhülse (16) erstreckt.

## Revendications

1. Turbo-compresseur (1), incluant :
- un arbre d'entraînement (3) incluant une première portion d'extrémité axiale (4) et une seconde portion d'extrémité axiale (5) opposée à la première portion d'extrémité axiale (4),
- au moins un étage de compression configuré pour comprimer un réfrigérant, l'au moins un étage de compression incluant au moins une roue (7) reliée à la première portion d'extrémité axiale (4) de l'arbre d'entraînement (3),
- un moteur électrique (8) configuré pour entraîner en rotation l'arbre d'entraînement (3) autour d'un axe de rotation, le moteur électrique incluant un stator (9) et un rotor (10), le rotor (10) étant relié à la seconde portion d'extrémité axiale (5) de l'arbre d'entraînement (3),
- un agencement de palier de butée configuré pour limiter un mouvement axial de l'arbre d'entraînement (3) durant le fonctionnement,
- un coussinet de palier (16) situé entre le moteur électrique (8) et l'au moins une roue (7), le coussinet de palier (16) ayant un axe longitudinal (B) et entourant l'arbre d'entraînement (3), le coussinet de palier (16) incluant :
- une partie de palier radiale à gaz (18) qui est tubulaire et qui est configurée pour supporter de façon rotative l'arbre d'entraînement (3),
- une partie de coussinet (19) entourant la partie de palier radiale (18), la partie de coussinet (19) incluant une face d'extrémité axiale (20) qui est tournée vers l'au moins une roue (7) et une surface de contact (23) qui est située au niveau de la face d'extrémité axiale (20) et qui est configurée pour coopérer avec l'agencement de palier de butée,
- un espace annulaire (21) formé entre la partie de palier radiale (18) et la partie de coussinet (19), et
- une zone de refroidissement (31) formée dans une surface circonférentielle extérieure (32) de la partie de coussinet (19) et prévue pour le passage d'un réfrigérant afin de dissiper de la chaleur à partir du coussinet de palier (16),
**caractérisé en ce que** la partie de coussinet (19) inclut des découpes (36) distribuées autour de l'axe longitudinal (B) du coussinet de palier (16) et débouchant dans la surface de contact (23).

2. Turbo-compresseur (1) selon la revendication 1, dans lequel les découpes (36) sont configurées de manière telle à réduire une raideur tangentielle de la partie de coussinet (19), au niveau de la face d'extrémité axiale (20).

3. Turbo-compresseur (1) selon la revendication 1 ou 2, dans lequel chacune des découpes (36) s'étend sensiblement parallèlement à l'axe longitudinal (B) du coussinet de palier (16).

4. Turbo-compresseur (1) selon l'une quelconque des revendications 1 à 3, dans lequel chacune des découpes (36) s'étend à travers au moins 50 % d'une épaisseur radiale d'une portion de partie de coussinet de la partie de coussinet (19) qui est adjacente à la surface de contact (23).

5. Turbo-compresseur (1) selon l'une quelconque des revendications 1 à 4, dans lequel chacune des découpes (36) s'étend à travers l'épaisseur radiale entière de la portion de partie de coussinet de la partie de coussinet (19).

6. Turbo-compresseur (1) selon l'une quelconque des revendications 1 à 5, dans lequel chacune des découpes (36) débouche dans la surface circonférentielle extérieure (32) de la partie de coussinet (19) et/ou dans une surface circonférentielle intérieure de la partie de coussinet (19).

7. Turbo-compresseur (1) selon l'une quelconque des revendications 1 à 6, dans lequel chacune des découpes (36) débouche dans l'espace annulaire (21).

8. Turbo-compresseur (1) selon l'une quelconque des revendications 1 à 7, dans lequel chacune des découpes (36) s'étend depuis la face d'extrémité axiale (20) et jusqu'à la zone de refroidissement (31) ou jusqu'au voisinage de la zone de refroidissement (31).

9. Turbo-compresseur (1) selon l'une quelconque des revendications 1 à 8, dans lequel chacune des découpes (36) s'étend sensiblement radialement par rapport à l'axe longitudinal (B) du coussinet de palier (16).

10. Turbo-compresseur (1) selon l'une quelconque des revendications 1 à 9, dans lequel chacune des découpes (36) est définie par deux faces latérales qui sont sensiblement parallèles.

11. Turbo-compresseur (1) selon l'une quelconque des revendications 1 à 10, dans lequel la surface de contact (23) est divisée par les découpes (36) en plusieurs segments de contact circonférentiels (37) qui sont angulairement séparés les uns des autres et qui sont distribués autour de l'axe longitudinal (B) du coussinet de palier (16).

12. Turbo-compresseur (1) selon l'une quelconque des revendications 1 à 11, dans lequel la surface de contact (23) est configurée pour coopérer avec une plaque de palier axiale de l'agencement de palier de butée.

13. Turbo-compresseur (1) selon l'une quelconque des revendications 1 à 12, dans lequel l'agencement de palier de butée inclut un élément de palier de butée (12) agencé sur la surface extérieure de l'arbre d'entraînement (3), l'élément de palier de butée (12) s'étendant sensiblement radialement vers l'extérieur par rapport à l'arbre d'entraînement (3).

14. Turbo-compresseur (1) selon l'une quelconque des revendications 1 à 13, dans lequel l'agencement de palier de butée inclut :
- une première plaque de palier axiale (13) ayant une forme de bague annulaire, la première plaque de palier axiale (13) ayant une première surface (13.1) et une seconde surface (13.2) opposée à la première surface (13.1) de la première plaque de palier axiale (13),
- une seconde plaque de palier axiale (14) ayant une forme de bague annulaire, la seconde plaque de palier axiale (14) ayant une première surface (14.1) faisant axialement face à la première plaque de palier axiale (13) et une seconde surface (14.2) opposée à la première surface (14.1) de la seconde plaque de palier axiale (14), la seconde surface (14.2) de la seconde plaque de palier axiale (14) prenant appui contre la surface de contact (23) du coussinet de palier (16), et
- une bague d'espacement (15) serrée entre les premières surfaces (13.1, 14.1) des première et seconde plaques de palier axiales (13, 14) au niveau de portions extérieures radiales des première et seconde plaques de palier axiales (13, 14), la bague d'espacement (15) définissant une distance axiale entre les première et seconde plaques de palier axiales (13, 14).

15. Turbo-compresseur (1) selon l'une quelconque des revendications 1 à 14, dans lequel la zone de refroidissement (31) inclut au moins un canal de refroidissement annulaire (33) formé dans la surface circonférentielle extérieure (32) de la partie de coussinet (19) et s'étendant autour de l'axe longitudinal (B) du coussinet de palier (16).
